# EUROPÄISCHE PATENTSCHRIFT

(11) **EP 1 200 527 B1**
(45) Veröffentlichungstag und Bekanntmachung des Hinweises auf die Patenterteilung: **06.05.2004**
(21) Anmeldenummer: 00947844.7
(22) Anmeldetag: 13.06.2000
(51) Int. Cl.: C09C 1/00, C09C 3/10, C09D 17/00

(54) **PIGMENTPRÄPARATION**
PIGMENT PREPARATION
PREPARATION PIGMENTAIRE

(30) Priorität: 25.06.1999 DE 19929378
(43) Veröffentlichungstag der Anmeldung: 02.05.2002
(73) Patentinhaber: MERCK PATENT GmbH, 64293 Darmstadt (DE)
(72) Erfinder: GRIESSMANN, Carsten, D-64846 Gross-Zimmern (DE); HERGET, Gerhard, D-64372 Ober-Ramstadt (DE); MEYER, Jochen, D-33739 Bielefeld (DE); RATHSCHLAG, Thomas, D-35781 Weilburg (DE)
(86) Internationale Anmeldenummer: PCT/EP2000/005391
(87) Internationale Veröffentlichungsnummer: WO 2001/000738

(56) Entgegenhaltungen:
- EP-A- 0 528 602
- EP-A- 0 803 552
- WO-A-98/38253
- DE-A- 2 522 986
- M. DALTON, R. KRAUSE, P. BRAUN: "Stabilisierung von Dispersionsn" FARBE & LACK, Bd. 103, Nr. 10, 1997, Seiten 124-131, XP002151087

## Beschreibung

Die Erfindung betrifft eine nichtstaubende, homogene Pigmentpräparation, die sich dadurch auszeichnet, daß sie mindestens 40 Gew.-% eines oder mehrerer Effektpigmente, 0,5 - 50 Gew.-% Wasser und/oder eines organischen Lösemittels bzw. Lösemittelgemisches und 0,5-59,5 Gew.-% eines styrolmodifizierten Polyacrylatharzes mit einer Säurezahl von > 90 mg/KOH bezogen auf das Pigment enthält. Derartige Pigmentpräparationen sind insbesondere geeignet zur Herstellung von Trockenpräparaten, wie z.B. Granulaten. Weiterhin betrifft die Erfindung die Herstellung der Pigmentpräparation sowie der Granulate und deren Verwendung zum Pigmentieren von Druckfarben.

In technischen Prozessen werden Pigmente oft nicht als trockene Pulver eingesetzt, da diese stauben, was zu erhöhten Anforderungen in Hinblick auf die Arbeitsplatzsicherheit führt. Weiterhin wird bei der Einbringung von Pulvern in Kunststoffe, Druckfarben, Industrielacke, Basislacksysteme, etc., vielfach eine Agglomeration des Pigmentpulvers beobachtet. Eine homogene Verteilung des Pigments in der jeweiligen Matrix ist häufig nur schwer oder aber gar nicht zu erreichen.

Anstelle des Pigmentpulvers werden nicht staubende Pigmentzubereitungen oder Trockenpräparate verwendet. Hierbei handelt es sich um
- rieselfähige Pulver, wobei Perlglanzpigmente mit Polymeren beschichtete werden, wie sie z.B. in der DE-PS-2603211 beschrieben sind,
- pigmentierte rieselfähige Pulver mit einem geringen Feuchtegehalt, wie sie z.B. aus der DE-OS-4139993 bekannt sind,
- pigmentierte Pulver mit einem höheren Feuchtegehalt, wobei letztere häufig auch aufgrund ihrer fließfähigen Konsistenz als Pasten bezeichnet werden,
- Pigmentzubereitungen in Granulatform, bei denen organische Pigmente mit einem Harzgemisch belegt sind, wie z.B. in der EP 0 897 956 A2 offenbart, oder um
- Trockenpräparationen, wie z.B. Pellets, Granulate als Vorprodukte für Druckfarben, wie sie z.B. aus der EP 0 803 552 A1 bekannt sind.

Nichtstaubende, homogene Pigmentpräparationen und daraus hergestellte Trockenpräparate sind eine technische Alternative zu den trockenen oder angefeuchteten Pulvern, wenn sie folgende Rahmenbedingungen erfüllen:
- fließfähige Konsistenz
- möglichst geringe Dilatanz
- möglichst hoher Pigmentgehalt

Die Komponenten der Präparation/Paste, bzw. der Trockenpräparate sollten dabei so gewählt sein, daß die Zubereitung möglichst gut auf die anderen Komponenten des jeweiligen Beschichtungssystems abgestimmt ist und sich nach der Einbringung leicht homogen verteilt.

Neben einer guten Kompatibilität mit den weiteren Bestandteilen des Beschichtungssystems müssen Pigmentpräparationen, bzw. die daraus hergestellten Trockenpräparate dazu führen, daß die Beschichtungssysteme eine hohe Stabilität aufweisen, d.h., sie dürfen nicht zur Phasenseparation neigen, bzw., wo dieses auf Grund der niedrigen Viskosität nicht vollständig zu verhindern ist, müssen die Beschichtungssysteme leicht wieder in einen homogenen Zustand versetzt werden können, d.h., das abgesetzte Sediment muß leicht wiederaufrührbar sein. Diese Forderung ist insbesondere wichtig bei plättchenförmigen Pigmenten, da diese auf Grund ihrer Struktur bei der Phasenseparation zum "Zusammenbacken" neigen und nur schwer wieder aufgerührt werden können. Pigmente auf der Basis plättchenförmiger Substrate sind insofern problematisch in der Handhabung, als die Pigmente infolge ihrer Größe und ihrer Dichte sich leicht absetzen und dann zu einem sehr festen Sedimentkuchen zusammenbacken können. Dieser Kuchen ist in der Regel nur schwer wiederaufrührbar. Dies gilt vor allem bei der Lagerung von Lacken, Farben und Druckfarben, aber auch bei der Verarbeitung derselben.

So wurden unter anderem zahlreiche Methoden entwickelt um das Problem der Einarbeitung und Handhabung von plättchenförmigen Pigmenten in Beschichtungsmassen zu lösen. Das Wiederaufrühren kann erleichtert werden, indem den Beschichtungsmassen Additive zugesetzt werden, die entweder eine gezielte Flokkulation (Kartenhauseffekt), ein strukturviskoses und/oder thixotropes Verhalten, eine sterische Abstoßung und/oder eine elektrostatische Abstoßung der Pigmente bewirken. Diese Zusätze können jedoch einen negativen Einfluß auf die Qualität der Beschichtung haben. Insbesondere die Brillanz bei Effektpigmenten und die Gleichmäßigkeit der Beschichtung können beeinträchtigt werden.

Weiterhin ist eine homogene, stabile Verteilung der Redispergiermittel im Perlglanzpigment-Pulver nur schwer zu erreichen bzw. das Redispergiermittel verliert beim Mischen an Aktivität.

Die bisher zur Verwendung in Beschichtungssystemen entwickelten Zubereitungen mit Effektpigmenten mit einem Pigmentanteil > 30 Gew.-% genügen den beschriebenen Anforderungen häufig nur unzureichend, insbesondere deshalb, da sie zur Agglomeration und Scherverdickung neigen.

Die Aufgabe der vorliegenden Erfindung bestand daher in der Bereitstellung von Pigmentpräparationen, insbesondere in Form von Zubereitungen bzw. Pasten und Trockenpräparaten, die gleichzeitig sehr gut in lösemittelhaltigen und lösemittelfreien Beschichtungssystemen verwendet werden können, eine hohe Stabilität aufweisen, sich leicht redispergieren lassen und sich gleichzeitig durch eine hohe Kompatibilität mit den übrigen Komponenten des Beschichtungssystems auszeichnen. Weiterhin soll die erfindungsgemäße Pigmentpräparation auch zur Herstellung von Trockenpräparaten, z.B. in Form von Pellets, Granulaten, etc., gut geeignet sein.

Überraschenderweise wurde gefunden, daß diese Aufgabe durch die Bereitstellung der erfindungsgemäßen Pigmentpräparation gelöst werden kann.
Gegenstand der Erfindung ist somit eine nichtstaubende, homogene Pigmentpräparation, die
- ≥ 40 Gew.-% ein oder mehrerer Effektpigmente,
- 0,5 - 59,5 Gew.-% eines styrolmodifizierten Polyacrylatharzes mit einer Säurezahl > 90 mg/KOH,
- 0,5 - 50 Gew.-% Wasser und/oder eines organischen Lösemittels oder Lösemittelgemisches,
- 0 - 10 Gew.-% Neutralisationsmittel und
- 0 - 10 Gew.-% Modifiziermittels
enthält.

Die erfindungsgemäße Präparation ist in Abhängigkeit vom Feuchtegehalt eine fließfähige Paste bzw. ein angefeuchtetes, rieselfähiges Pulver. Beide sind sehr gut zur Herstellung von Trockenpräparaten, z.B. Granulaten, Pellets, Briketts, geeignet. Die aus der erfindungsgemäßen Pigmentzubereitung hergestellten Trockenpräparate sind ebenfalls Gegenstand der Erfindung.

In der EP 0 803 552 A1 werden in sehr allgemeiner Form rieselfähige Granulate beschrieben, die neben einem Perlganzpigment ein Bindemittel, wie z. B. ein Polyacrylat, enthalten. Im Gegensatz zu Granulaten mit herkömmlichen Polyacrylatharzen zeichnen sich die erfindungsgemäßen Trockenpräparate/Granulate enthaltend ein styrolmodifiziertes Polyacrylat und ein Effektpigment, wie z. B. ein Perlglanzpigment, durch eine hohe Glasübergangstemperatur aus. Dieser Zustand sorgt für eine blockfeste Einstellung der daraus hergestellten Farben, Lacke, Druckfarben und Überdrucklacke. Weiterhin zeichnet sich das erfindungsgemäße Granulat durch eine besonders gute Kompatibilität mit den üblichen Harzen und Additiven aus.

Aus der WO 98/38253 sind Pigmentpräparationen bekannt, die neben Perlglanzpigmenten und oberflächenaktiven Substanzen ein Polymer, wie z.B. ein Polyacrylat, enthalten.

In der EP 0 528 602 wird ein Verfahren zur Stabilisierung von organischen Pigmenten beschrieben, in dem die Pigmente mit einem festen Polymer beschichtet werden.

Die Verwendung eines styrol-modifizierten Polyacrylatharzes mit einer Säurezahl von > 90 mg/KOH in Pigmentpräprarationen mit Effekpigmenten wird im Stand der Technik nicht beschrieben.

Weiterhin sind die erfindungsgemäßen Produkte nicht staubend, gut rieselfähig, lassen sich schnell in kommerziell erhältliche Bindemittelsysteme einarbeiten und sind dort kompatibel. Insbesondere sind die Produkte sowohl kompatibel mit wäßrigen, lösemittelhaltigen und teilweise auch in lösemittelfreien Druckfarben- und Lacksystemen. Die über das Trockenpräparat, z.B. Granulat, hergestellten Farben und Lacke sind geeignet für den Tiefdruck, Flexodruck, Siebdruck, Offsetüberdrucklack, Überdrucklack (OPV = Overprint Varnish), sowie die verschiedenen Lacksysteme aus dem Industrielack und Automobilsektor. Auch für Kunststoffeinfärbungen kommen sie in Betracht.

Die erfindungsgemäße Pigmentpräparation enthält vorzugsweise 40 - 98 Gew.-% an Effektpigmenten, insbesondere 45 - 95 Gew.-%, bezogen auf die Präparation. Ganz besonders bevorzugt sind Pigmentpräparationen mit einem Gehalt an Effektpigmenten von mehr als 50 Gew.-%. Die Gew.-%-Angaben beziehen sich immer auf die feuchte, d.h. nicht getrocknete, Pigmentpräparation.

Als Effektpigmente werden Pigmente auf der Basis plättchenförmiger, transparenter oder semitransparenter Substrate aus z.B. Schichtsilikaten, wie etwa Glimmer, synthetischen Glimmer, plättchenförmiges Eisenoxid, SiO₂-Plättchen, TiO₂-Plättchen, Graphitplättchen, Fe₂O₃-Plättchen, Al₂O₃-Plättchen, Glasplättchen, holographischen Pigmenten, Talkum, Sericit, Kaolin, oder anderen silikatischen Materialien verwendet, die mit seltenen Erdmetallsulfiden wie z. B. Ce₂S₃, farbigen oder farblosen Metalloxiden z. B. TiO₂, Titansuboxide, Titanoxinitride, Fe₂O₃, Fe₃O₄, SnO₂, Cr₂O₃, ZnO, CuO, NiO, und anderen Metalloxiden allein oder in Mischung in einer einheitlichen Schicht oder in aufeinanderfolgenden Schichten (Multilayerpigmente) belegt sind. Die sogenannten Multilayer- oder Mehrschichtpigmente sind z. B. bekannt aus den deutschen Offenlegungsschriften DE 197 46 067, DE 197 07 805, DE 19 07 806 und DE 196 38 708. Perlglanzpigmente auf Basis von Glimmerplättchen sind z.B. aus den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017 und P 38 42 330 bekannt und im Handel erhältlich, z.B. unter den Marken Minatec® und Iriodin® der Fa. Merck KGaA, Darmstadt, BRD. Besonders bevorzugte Pigmentpräparationen enthalten TiO₂/Glimmer-, Fe₂O₃/Glimmer- und/oder TiO₂/Fe₂O₃-Glimmerpigmente. Die Beschichtung der SiO₂-Plättchen kann z. B. erfolgen wie in der WO 93/08237 (naßchemische Beschichtung) oder DE-OS 196 14 637 (CVD-Verfahren) beschrieben. Al₂O₃-Plättchen sind beispielsweise aus der EP 0 763 573 A1 bekannt. Plättchenförmige Substrate, die mit ein oder mehreren seltenen Erdmetallsulfiden belegt sind, werden z. B. in der DE-OS 198 10 317 offenbart.

Weiterhin geeignet sind Metalleffektpigmente, insbesondere für wäßrige Systeme modifizierte Aluminiumplättchen, wie sie von der Fa. Eckart unter der Marke Rotövario Aqua® oder Stapa Hydroxal vertrieben werden, sowie Variocrom®- und Paliocrom®-Pigmente der Fa. BASF insbesondere auch solche aus den Offenlegungsschriften EP 0 681 009, EP 0 632 110, EP 0 634 458, sowie LCP-Pigmente (Liquid Crystal Polymers). Weiterhin geeignet sind ebenfalls alle dem Fachmann bekannten plättchenförmigen Pigmente, die Metallschichten aufweisen. Derartige Pigmente werden von der Fa, Flex, Fa, BASF, der Fa, Eckart und der Fa. Schlenk vertrieben.

Die erfindungsgemäßen Pigmentpräparationen können ein oder mehrere Effektpigmente enthalten. Vielfach können durch die Verwendung von mindestens zwei verschiedenen Effektpigmenten besondere Farb- und Glanzeffekte erzielt werden. Bevorzugte Pigmentpräparationen enthalten ein oder mehrere Effektpigmente auf Basis von Glimmer und/oder SiO₂-Plättchen. Weiterhin sind Abmischungen mit organischen und anorganischen Pigmenten bis zu 10 Gew.-% bezogen auf die Pigmentpräparation möglich.

Insbesondere führt die Zugabe von ein oder mehreren Farbstoffen und/oder organischen Pigmenten in angeriebener Form zu speziellen Farbeffekten. Weiterhin können solche Substanzen und Partikel (tracer) zugesetzt werden, die eine Produktidentifizierung ermöglichen (Produktschutz).

Als zwingende Komponente enthält die erfindungsgemäße Pigmentpräparation ein styrolmodifiziertes Polyacrylatharz mit einer Säurezahl > 90 mg KOH in Mengen von 0,5 bis 59,5 Gew.-%, vorzugsweise 5 bis 40 Gew.-%, insbesondere 10 bis 30 Gew.-%. Besonders bevorzugt sind styrolmodifizierte Polyacrylatharze, die eine Säurezahl von > 100, insbesondere von > 150, aufweisen.

Die verwendeten styrolmodifizierten Polyacrylate haben ein mittleres Molekulargewicht von 500 bis 200000, vorzugsweise von 1000 bis 100000, insbesondere von 1000 bis 50000. Bei ansonsten gleichen Eigenschaften sind die Polymere mit einem niedrigen Molekulargewicht bevorzugt, da diese in der Regel eine geringere verdickende Wirkung in den Beschichtungssystemen zeigen.

Die styrolmodifizierten Polyacrylate werden hergestellt durch radikalische Polymerisation, insbesondere Co- bzw. Terpolymerisation, wobei gesättigte und ungesättigte Alkohole sowie weitere Funktionalisierungen in breiten Massenverhältnissen eingebaut werden können. Insbesondere können auch Polyethylen- und Polypropyleneinheiten bzw. Mischungen von Alkylenoxiden in das Polymergrundgerüst eingebaut sein, sowie Alkylenoxidester, -amine, -ether und freie Carboxylgruppen. Dieser Einbau ist insbesondere von großem Vorteil für die Kompatibilität der erfindungsgemäßen Produkte in wäßrigen Systemen. Die so hergestellten styrolmodifizierten Polyacrylate zeichnen sich durch ihre Beständigkeit gegen Licht (Vergilbungsfestigkeit), gegen Sauerstoff (Lagerstabilität), gegen Selbstentzündung sowie durch geringe statische Aufladung aus.

Insbesondere geeignet sind α-Methylstyrol-modifizierte Polyacrylatharze. Vorzugsweise werden erfindungsgemäß solche Harze eingesetzt, die eine Glasübergangstemperatur oberhalb der Raumtemperatur aufweisen. Damit ist ein Verblocken und mangelnde Rieselfähigkeit des Trockenpräparates ausgeschlossen. So besitzen die verwendeten Polyacrylatharze eine Glasübergangstemperatur vorzugsweise von 50 - 140 °C, insbesondere von 50 - 130 °C. Die Erweichungstemperatur der verwendeten Harze liegt vorzugsweise zwischen 90 - 150 °C, insbesondere zwischen 100 - 120 °C.

Die styrolmodifizierten Harze sind auch im Handel erhältlich z. B. unter den Markennamen Joncryl® (Fa. Johnson Polymers), Carboset® (Fa. BF Goodrich) oder Morton® (Fa. Morten International).

Vorteilhaft ist weiterhin, wenn die erfindungsgemäße Pigmentpräparation 0 bis 10 Gew.-%, vorzugsweise 0,05 bis 5 Gew.-%, insbesondere 0,01 bis 3 Gew.-% eines Modifizierungsmittels enthält. Insbesondere wird als Modifiziermittel ein Polyalkylenoxid bzw. deren Derivate eingesetzt, um die Festigkeit, die Kompatibilität und die Auflösegeschwindigkeit der Trockenpräparate zu erhöhen. Ferner sind als Modifiziermittel die Wiederaufrührbarkeit verbessernde Harze wie Kolophoniumharze, Maleinatharze, Urethanharze, Nitrocellulose und alle bekannten Cellulosederivate, Polyester, PVC, Sulfopolyester, Polyethylenglykolester und ether, Emulgatoren, Tenside in Mengen von 0,1 bis 10 Gew.-%, vorzugsweise 0,05 bis 5 Gew.-%, insbesondere 0,01 bis 3 Gew.-%, bezogen auf die Präparation geeignet.

Insbesondere können auch solche Stoffe zugesetzt sein, die das Zerfallen und Lösen der Pigmentgranulate beschleunigen bzw. unterstützen, z.B. sperrige sphärische Partikel, wie Hohlkugeln, Halbkugeln, quellfähige Stoffe mit starkem Quellvermögen, Stoffe die sich unter Gasentwicklung kontrolliert zersetzen, bzw. solche mit sehr hoher Löslichkeit.

Die erfindungsgemäße Pigmentpräparation oder daraus hergestellte Trockenpräparate enthalten vorzugsweise als weitere Komponente ein oder mehrere Neutralisationsmittel. Geeignet sind insbesondere die auf dem Lacksektor üblichen Basen, wie z.B. Harnstoff, Harnstoffderivate, Ammoniak, Aminoalkohole, Alkalihydroxide, wie z.B. KOH oder NaOH, Amine, wobei es sich bevorzugt bei Präparationen für wässrige Anwendungen um nichtflüchtige organische niedermolekulare Amine handelt bzw. um solche, die bei 100 °C nur eine geringe Flüchtigkeit besitzen.

Die Säurezahl des Polyacrylats in Verbindung mit dem Neutralisationsmittel führt dazu, daß die Harze Wasserlöslichkeit erlangen. Die Wasserlöslichkeit ist gemäß der vorliegenden Erfindung zum Einen wichtig beim Herstellprozeß, um einen wäßrigen Weg beschreiten zu können, zum Anderen ist die Wasserlöslichkeit Voraussetzung für den Einsatz in wäßrigen und wasserhaltigen Druckfarbensystemen (Kompatibilität). In der Regel enthält die erfindungsgemäße Pigmentpräparation 0 bis 10 Gew.-% eines Neutralisationsmittels, vorzugsweise 1 bis 7 Gew.-%, insbesondere 1 bis 5 Gew.-%, bezogen auf die Pigmentpräparation. Falls erforderlich wird durch den Zusatz eines Redispergierhilfsmittels in Form von sperrigen Teilchen, wie z.B. Fasern oder sphärischen Partikeln, verhindert, daß die nach dem erfindungsgemäßen Verfahren behandelten Effektpigmente sich auf Grund der sterischen Abstoßung in nennenswertem Umfang aufeinanderlegen und damit eine starke Adhäsion ausüben. Dies bewirkt, daß
1. die erfindungsgemäßen Präparationen stabiler sind, und
2. durch den Eintrag der Redispergierhilfe über die Pigmentpräparation in das Lack- oder Farbsystem die Effektpigmente sich in Lack- und Farbsystemen zum Teil sehr viel langsamer absetzen,
das Sediment aber in allen Fällen weniger hart ist, und daß keine Probleme beim Wiederaufrühren des Bodensatzes auftreten.

Das Redispergiermittel wird vorzugsweise in Mengen von 0 bis 5 Gew.-%, insbesondere von 0,05 bis 3 Gew.-%, bezogen auf die Pigmentpräparation eingesetzt. Alle dem Fachmann bekannten organischen und anorganischen Fasern mit einer Faserlänge von 0.1-20 µm können verwendet werden. Geeignete Partikel sind insbesondere alle Kunstfasern, z.B. aus Polyethylen, Polyacrylaten, Polypropylen, Polyamiden, Cellulosefasern, anorganische Fasern, hier bevorzugt Siliziumverbindungen, Glasfasern sowie insbesondere die Kondensationsprodukte aus modifizierten Isocyanaten und Mono- und Diaminen.

Diese Kondensationsprodukte, wobei es sich um Diharnstoffderivate sowie Aminoharnstoffe mit Urethangruppierungen handelt, sind als Thixotropierungsmittel bekannt und werden mit einem Bindemittel Farben und Lacken zugesetzt, um die Ablaufeigenschaften und die Streichbarkeit zu verbessern.

Als Redispergierhilfsmittel können alle dem Fachmann bekannten Diharnstoffderivate und Urethanverbindungen verwendet werden, wie sie z.B. in der EP 0 198 519, der DE 18 05 693.4 und in Organic Coatings: Science and Technology, A. Heenriga, P.J.G. von Hemsbergen, S. 201-222, New York 1983 beschrieben werden.

Geeignete sphärische Materialien sind insbesondere Glas-, Wachs- oder Polymerhohlkugeln aus Vinylharzen, Nylon, Silicon, Epoxyharzen, Olefinharzen, Polystyrolen sowie anorganische Materialien, wie z.B. TiO₂, SiO₂ oder ZrO₂. Vorzugsweise werden Hohlkugeln, ferner auch Vollkugeln, mit einer Teilchengröße von 0,05 bis 150 µm verwendet. Insbesondere bevorzugt werden in der erfindungsgemäßen Pigmentpräparation Glas-, Wachs- oder Polymerhohlkugeln eingesetzt.

Sphärische Teilchen auf Basis von SiO₂ in einem Teilchenbereich von 3-10 µm sind z.B. als Materialien für die Hochdruckflüssigkeitschromatographie bekannt und werden z.B. als LiChrospher® von der Fa. Merck KGaA, Darmstadt, BRD, vertrieben. Vorzugsweise werden solche Materialien in monodisperser Form, d.h. mit einer möglichst einheitlichen Teilchengröße, eingesetzt. Bekannt sind solche monodispersen sphärischen Teilchen auf Basis von SiO₂, TiO₂ und ZrO₂. Monodisperses SiO₂ kann beispielsweise nach der DE 36 16 133 hergestellt werden. Glashohlkugeln werden beispielsweise unter dem Handelsnamen Q-CEL von der Fa. PQ Corporation, USA oder Scotchlite von der Fa. 3M, Frankfurt, BRD vertrieben.

Zusätzlich kann die erfindungsgemäße Pigmentpräparation oberflächenaktive Substanzen enthalten, wie z.B. Alkylsilane, die auch eine weitere funktionelle Gruppe enthalten können, ungesättigte oder gesättigte Fettsäuren oder Fluortenside. Insbesondere bevorzugt werden Silanverbindungen der Formel (CₙH₂ₙ₊₁)Si(OCₘH₂ₘ₊₁)₃, worin n 1-30 und m 1-10 bedeutet, als oberflächenaktive Substanzen eingesetzt. Geeignete Silanverbindungen sind beispielsweise n-Hexyldecyltriethoxysilan und n-Octyldecyltriethoxysilan (Si 116 bzw. Si 118 der Degussa AG, Frankfurt, BRD) sowie die entsprechenden Fluoralkylsilane.

Vorzugsweise enthält die Pigmentpräparation neben dem Silan noch zusätzlich ein Tensid oder eine Fettsäure. Bei dem oberflächenaktiven Reagenz kann es sich auch um ein Gemisch aus Silan, Fettsäuren und/oder Tensiden handeln. Die Pigmentpräparationen können 0,1 bis 5 Gew.-%, vorzugsweise 0,2 bis 3 Gew.-% und insbesondere 0,5 bis 2 Gew.-% an oberflächenaktiven Substanzen bezogen auf die Präparation enthalten.

Ferner können als oberflächenaktive Substanzen die gesättigten und ungesättigten Fettsäuren, wie z.B. Capronsäure, Caprylsäure, Caprinsäure, Laurinsäure, Myristinsäure, Palmitinsäure, Stearinsäure, Ölsäure, Linolsäure sowie Fettsäuregemische eingesetzt werden..

Die erfindungsgemäße Pigmentpräparation enthält 0,5 bis 50 Gew.-% Wasser und/oder eines organischen Lösemittels bzw. Lösemittelgemisches, vorzugsweise 1 bis 45 Gew.-%, insbesondere 1 bis 40 Gew.-%, bezogen auf die Präparation.

Die Lösemittelkomponente in der erfindungsgemäßen Pigmentpräparation muß auf das Harz mit einer Säurezahl > 90 mg/KOH sachgemäß abgestimmt werden. Bei der Herstellung können Wasser sowie alle organischen Lösemittel eingesetzt werden in Abhängigkeit vom eingesetzten Polyacrylatharz. Geeignete Lösemittel sind z. B. aromatische Lösungsmittel wie Toluole, Benzine, Xylole, Kohlenwasserstoffe sowie Ester, Cyclohexan, Furane, Dioxane, Chlorkohlenwasserstoffe, langkettige Amine, pflanzliche Öle, einwertige aliphatische Alkohole, wie solche mit 2 bis 4 Kohlenstoffatomen, z.B. Ethanol, Butanol oder Isopropanol oder Ketone, z.B. Aceton oder Methylethylketon oder Glykolether, wie z.B. Propylenglycolmonoethylether, Propylenglycolmonoethylether oder Diole, wie z.B. Ethylenglykol und Propylenglykol oder Polyetherdiole, aliphatische Triole und Tetrole mit 2 bis 6 Kohlenstoffatomen, wie Trimethylolethan, Trimethylolpropan, Glycerin, 1,2,4-Butantriol, 1,2,6-Hexantriol und Pentaerythrit, sowie alle anderen Lösemittel anderer Verbindungsklassen bzw. der Gemische der vorgenannten Lösemittel. Vorzugsweise werden solche Lösemittel eingesetzt, die in Karsten, Lackrohstofftabellen, 9. Auflage 1992, aufgelistet sind.

Die Herstellung der erfindungsgemäßen Pigmentpräparation erfolgt einfach dadurch, daß zu dem Effektpigment bzw. Effektpigmentgemisch, das Polyacrylatharz, Wasser und/oder ein organisches Lösemittel oder Lösemittelgemisch, ein Modifiziermittel und gegebenenfalls weitere Additive, gleichzeitig oder nacheinander hinzugegeben werden, und daß diese Mischung in einem Mischgerät schonend homogenisiert wird.

Vorzugsweise wird das Pigment vorgelegt und zunächst unter Rühren mit dem Wasser bzw. dem organischen Lösemittel oder Lösemittelgemisch enthaltend das Polyacryltharz und gegebenenfalls bereits das Modifiziermittel, angeteigt; anschließend erfolgt gegebenenfalls die Zugabe einer weiteren Lösung bestehend aus Wasser bzw. Lösemittel und Additiven.

Der erfindungsgemäßen Pigmentpräparation.können während oder nach der Herstellung weitere übliche Additive zugesetzt werden, wie z.B. Entschäumer, Netzmittel, Antiabsetzmittel, Verlaufsmittel, Sikkative oder Thixotropiermittel. Es handelt sich hierbei um in der Lackindustrie übliche Hilfsstoffe, die in der erfindungsgemäßen Pigmentpräparation in einer Menge von 0 bis 10 Gew.-% enthalten sein können. Insbesondere sind hier genannt Succinatderivate, z.B. solche wie sie von der Fa. Henkel unter der Marke Hydropalat 875 vertrieben werden.

Bei der erhaltenen erfindungsgemäßen feuchten Pigmentpräparation handelt es sich um ein homogenes Pulver bzw. um gut fließfähige Pasten mit einem relativ hohen Gehalt an Effektpigmenten. Aufgrund der besonders hohen Kompatibilität des styrolmodifizierten Polyacrylatharzes ist die erfindungsgemäße Pigmentpräparation ebenfalls gut kompatibel mit handelsüblichen Systemen. Weiterhin zeichnet sich die Präparation durch ihre Staubfreiheit, die gute Dispergierbarkeit und Redispergierbarkeit aus und ist somit herkömmlichen Pigmentpräparationen deutlich überlegen.

Zur Herstellung von Trockenpräparaten wird die erfindungsgemäße Pigmentpräparation stranggepreßt oder auf anderen dem Fachmann bekannten Wegen in eine kompakte Teilchenform verdichtet, z. B. durch Tablettieren, Brikettieren, Pelletieren, Granulieren, Sprühgranulieren, Wirbelbettgranulieren, oder Extrudieren, und gegebenenfalls anschließend getrocknet. Der Trocknungsprozeß findet in der Regel bei Temperaturen von 20 °C bis 150 °C statt, vorzugsweise bei 60 bis 120 °C, und kann ggf. unter reduziertem Druck erfolgen. Die Trockenpräparate, wie z.B. Granulate, weisen eine Restfeuchte von max. 5 Gew.-%, vorzugsweise < 3 Gew.-%, auf. Die Granulate weisen Pigmentgehalte von > 70 Gew.-%, vorzugsweise von > 80 Gew.-%, bezogen auf das Granulat auf. Zuletzt wird das Trockenpräparat gegebenenfalls klassiert. Die so erhaltenen getrockneten Granulate haben gegenüber den wasser- bzw. lösemittelhaltigen Präparationen nochmals gesteigerte positive Eigenschaften: Die fehlenden flüssigen Komponenten erhöhen die Kompatibilität. Speziell trockene Granulate zeigten überraschenderweise auch keine Nachteile in der Benetzung. Im Gegenteil, bei Zugabe zu einem wäßrigen Bindemittel oder einem Bindemittel auf Basis polarer Lösemittel (Ethanol, Ethylacetat, MEK, etc.) erfolgt schneller Zerfall des Granulats und eine sofortige vollständige Benetzung. Weitere Vorteile einer trockenen Zubereitung sind die verbesserte Lagerstabilität, der erleichterte Transport und die verbesserte Produktionssicherheit beim Kunden. Granulate, beispielsweise in Kugelform, sind sehr gut fließfähig und leicht zu dosieren und haben bei allen diesen Eigenschaften eine vollständige Freiheit von Staub. Das Volumen dieser Granulate ist reduziert auf ca. 1/3 des Volumens von Perlglanzpigmentpulvern. Die Teilchengrößen der Trockenpräparate liegen im Bereich von 0,1 bis 150 mm, vorzugsweise 0,1 - 20 mm, insbesondere 0,1 - 2 mm.

Neben der guten Verträglichkeit mit den Beschichtungssystemen sowie den Synergieeffekten mit den übrigen Komponenten in der Pigmentpräparation bzw. im Trockenpräparat ist mit der hohen Säurezahl des styrol-modifizierten Polyacrylats die Möglichkeit gegeben, die Harze zusammen mit Neutralisationsmitteln in eine wasserlösliche Form zu überführen. Die Herstellung der Trockenpräparate wie z.B. Granulate, kann somit über einen wäßrigen Weg vollzogen werden, was erheblich höhere Produktionssicherheit gegenüber der Verwendung von Lösemitteln mit sich bringt.

Durch die Integration einer Redispergierhilfe ist gewährleistet, daß die erfindungsgemäßen Pigmentpräparationen auch in den fertigen Lack- und Farbsystemen leicht aufrührbar sind und keiner weiteren Verbesserung durch den Endformulierer mehr bedürfen.

Die verbesserte Deagglomeration der Trockenpräparate eingearbeitet in ein Bindemittel, z.B. in eine Druckfarbe, zeigt sich bereits mit geringen Mengen an sphärischen Teilchen in der Pigmentpräparation. So werden bereits bei der Verwendung von Granulaten mit einem Gehalt von 0,5 Gew.-% an sphärischen Teilchen bezogen auf das Trockenpräparat die Auflösegeschwindigkeit deutlich erhöht und die Stabilität der Druckfarbe schneller erzielt (Viskosität/Farbton).

Die Trockenpräparate sind nicht staubend, gut rieselfähig und lassen sich schnell in kommerziell erhältliche Bindemittelsysteme einarbeiten und sind dort kompatibel. Insbesondere sind die Produkte kompatibel sowohl mit wäßrigen, lösemittelhaltigen als auch lösemittelfreien Druckfarben und Lacksystemen.

Die erfindungsgemäße Präparation als Paste oder als Trockenpräparat kann für vielfältige Anwendungen verwendet werden. Bevorzugt wird sie in Beschichtungssystemen aus den Bereichen Druck, insbesondere Überdrucklackierung, Offsetüberdrucklackierung, und Tiefdruck, Flexodruck und Siebdruck, eingesetzt. Besonders bevorzugt wird die Präparation bzw. das daraus hergestellte Trockenpräparat als Vorprodukt für Beschichtungsmassen auf beliebige Substratmaterialien, beispielsweise Metalle wie Eisen, Stahl, Aluminium, Kupfer, Bronze, Kunststoff, Messing sowie Metallfolien aber auch Glas, Keramik und Beton, als auch auf Holz, z.B. Möbel, Ton, Textil, Papier, Verpackungsmaterialien, z.B. Kunststoffbehälter, Folien oder Pappen, oder auf anderen Materialien zu dekorativen und/oder schützenden Zwecken aufgebracht.

Gegenstand der Erfindung ist somit auch die Verwendung der Pigmentpräparation in Formulierungen wie Farben, Lacken, Druckfarben und Kunststoffen, sowie Automobillacken, Pulverlacken und Beschichtungsmassen allgemeiner Art.

Die nachfolgenden Beispiele sollen die Erfindung näher erläutern, ohne sie jedoch zu beschränken.

### Beispiel 1

679 g Joncryl® HPD 671-Harzlösung (26 %ige Lösung eines styrolmodifizierten Polyacrylatharzes bestehend aus 80 g AMP 75, 176,5 g Joncryl® HPD 671 mit einer Säurezahl von 214 und einem Molekulargewicht von17250 und 922,5 g VE-Wasser) werden in einem Mischer R02 der Fa. Eirich mit 1000 g Iriodin® 123 (TiO₂-Glimmerpigment der Teilchengröße 5-20 µm der Fa. Merck KGaA) homogen gemischt. Die angefeuchtete Mischung wird auf einem Granulierteller TR01 der Fa. Eirich granuliert. Die feuchte, granulierte Mischung wird bei 80 °C und 100 mbar getrocknet. Die getrockneten Granulate werden zunächst über ein Sieb mit Maschenweite 2 mm und anschließend über ein Sieb mit Maschenweite 200 µm gegeben.

Das Produkt ist abriebfest und formstabil und verträglich mit dem gängigen wäßrigen Bindemittel Senolith Hochglanzlack 350081 (Offset-Überdrucklack auf Basis einer Styrolacrylat-Dispersion enthaltend als Modifiziermittel. ein Natriumsalz der Sulfobernsteinsäure) der Weilburger Lackfabrik.

### Beispiel 2

Eine Lösung wird hergestellt aus 69,8 g Joncryl® 682 Granulierharz (styrolmodifiziertes Polyacrylatharz mit einem Molekulargewicht von 1800 der Fa. Johnson Polymers), 287,4 g VE-Wasser, 5,4 g 25%ige Ammoniaklösung, 37,0 g AMP-75 (2-Amino-2-methyl-1-propanol), 14,0 g Polyethylenglykol 2000 (Modifiziermittel) und in einem 4-Flügelmischer mit 586,4 g Iriodin® 100 (TiO₂-Glimmerpigment der Teilchengröße 10 - 60 µm der Fa. Merck KGaA) homogen gemischt.

Die so hergestellte Präparation wird auf einem Granulierteller TR01 der Fa. Eirich granuliert. Die Trocknung der Granulate erfolgt bei 100 °C. Um Grobkorn und Feingut von Gutkorn zu trennen, werden die getrockneten Grariulate zunächst über ein grobes Sieb gegeben (obere Teilchengrenze 1,6 mm) und anschließend wird der Staub und der Feinanteil über ein feines Sieb (unter Teilchengröße 0,4 mm) abgetrennt. Die so hergestellten Granulate sind abriebfest, formstabil und gut verträglich mit dem wäßrigen Bindemittel Senolith Hochglanzlack 350081 (Offset-Überdrucklack auf Basis einer Styrofacrylat-Dispersion enthaltend als Modifiziermittel ein Natriumsalz der Sulfobernsteinsäure) der Weilburger Lackfabrik.

### Beispiel 3

Eine Lösung wird hergestellt aus 69,8 g Joncryl® 682 Granulierharz (styrolmodifiziertes Polyacrylatharz mit einem Molekulargewicht von 1800 der Fa. Johnson Polymers), 287,4 g VE-Wasser, 5,4 g 25%ige Ammoniaklösung 37,0 g AMP-75 (2-Amino-2-methyl-1-propanol), 14,0 g Hydropalat 875 (Na-Salz der Sulfobernsteinsäure der Fa. Henkel) und in einem 4-Flügelmischer mit 586,4 g Iriodin® 100 (TiO₂-Glimmerpigment der Teilchengröße 10-60 µm der Fa. Merck KGaA) homogen gemischt.

Die so hergestellte Präparation wird auf einem Granulierteller TR01 der Fa. Eirich granuliert. Die Trocknung der Granulate erfolgt bei 100 °C.

Um Grobkorn und Feingut von Gutkorn zu trennen, werden die getrockneten Granulate zunächst über ein grobes Sieb gegeben (obere Teilchengrenze 1,6 mm) und anschließend wird der Staub und der Feinanteil über ein feines Sieb (unter Teilchengröße 0,4 mm) abgetrennt.

Die so hergestellten Granulate sind abriebfest, formstabil und gut verträglich mit Senolith Hochglanzlack 350081 (Offset-Überdrucklack auf Basis einer Styrolacrylat-Dispersion enthaltend als Modifiziermittel ein Natriumsalz der Sulfobernsteinsäure) der Weilburger Lackfabrik.

### Beispiel 4

Eine Lösung wird hergestellt aus 69,8 g Joncryl® 682 Granulierharz (styrolmodifiziertes Polyacrylatharz mit einem Molekulargewicht von 1800 der Fa. Johnson Polymers), 287,4 g VE-Wasser, 5,4 g 25%ige Ammoniaklösung, 37,0 g AMP-75 (2-Amino-2-methyl-1-propanol), 14,0 g Polyethylenglykol 2000 (Modifiziermittel) und in einem 4-Flügelmischer mit 586,4 g Fe₂O₃ beschichtete SiO₂-Flakes der Teilchengröße 5-40 µm (Fa. Merck KGaA) homogen gemischt.

Die so hergestellte Präparation wird auf einem Granulierteller TR01 der Fa. Eirich granuliert. Die Trocknung der Granulat erfolgt bei 100 °C.

Um Grobkorn und Feingut von Gutkorn zu trennen, werden die getrockneten Granulate zunächst über ein grobes Sieb gegeben (obere Teilchengrenze 1,6 mm) und anschließend wird der Staub und der Feinanteil über ein feines Sieb (unter Teilchengröße 0,4 mm) abgetrennt.

Die so hergestellten Granulate sind abriebfest, formstabil und gut verträglich mit den gängigen lösemittelfreien wäßrigen Bindemittel- / Lacksystemen, wie z.B. Senolith Hochglanzlack 350081 der Fa. Weilburger Lackfabrik aus dem Druckbereich.

### Beispiel 5

413,6 g einer 16,9%igen Joncryl® 682-Lösung (Lösung bestehend aus 287,4 g Wasser, 14 g Polyethylenglykol 2000, 42,2 g 2-Amino-2-methylpropanol (75 %ig) und 69,8 g Joncryl® 682) werden in einem Mischer R02 der Fa. Eirich mit 586,4 g Iriodin® 100 (TiO₂-Glimmerpigment der Teilchengröße 10-60 µm der Fa. Merck KGaA) homogen gemischt. Die angefeuchtete Mischung wird auf einem Granulierteller TR01 der Fa. Eirich granuliert. Die feuchte, granulierte Mischung wird bei 80 °C und 100 mbar getrocknet. Die getrockneten Granulate werden zunächst über ein Sieb der Maschenweite 2 mm und anschließend über ein Sieb mit der Maschenweite 200 µm gegeben. Das Produkt ist abriebfest und formstabil und gut verträglich mit den gängigen wäßrigen Bindemittel- / Lacksystemen, wie z.B.Senolith Hochglanzlack 350081 der Fa. Weilburger Lackfabrik, aus dem Druckbereich.

### Vergleichsbeispiel (EP 0 803 552 A1)

### Granulat aus Perlglanzpigment (Iriodin® 123) und Polyacrylat (nicht styrolmodifiziert)

643 g Neocryl B817 (17.5 %ige in AMP 75, neutralisierte Lösung eines MMA/EA-Copolymer in Wasser, mit einer Säurezahl von 59, einer T_{G} von 65 °C und einem mittleren Molekulargewicht von 20000, Fa. Zeneca Resins, Waalwijk, Niederlande) und 1000 g Iriodin® 123 (TiO₂-Glimmerpigment der Teilchengröße 5-20 µm der Fa. Merck KGaA) werden in einem Mischer homogen gemischt. Die angefeuchtete Mischung wird auf einem Granulierteller TR01 der Fa. Eirich granuliert. Die feuchte, granulierte Mischung wird bei 80 °C und 100 mbar getrocknet. Die getrockneten Granulate werden zunächst über ein Sieb der Maschenweite 2 mm und anschließend über ein Sieb mit Maschenweite 200 µm gegeben.

Das Produkt ist abrieb- und formstabil. Im Vergleich zu den Beispielen 1-6 verteilt es sich deutlich langsamer im Prüfbindemittel Senolith Hochglanzlack 350081 der Fa. Weilburger Lackfabrik und löst sich aber im Gegensatz zu styrolmodifiziertem Polyacrylatharz mit Säurezahlen > 90, nur verzögert in gängigen und wäßrigen Bindemitteln und Überdrucklacken auf. Gleichzeitig ist eine erhöhte Schaumneigung bei der Verseifung des Neocryl B 817-Festharzes festgestellt worden.

## Patentansprüche

1. Nichtstaubende homogene Pigmentpräparation, **dadurch gekennzeichnet, daß** sie
- ≥ 40 Gew.-% ein oder mehrerer Effektpigmente,
- 0,5 - 59,9 Gew.-% eines styrolmodifizierten Polyacrylates mit einer Säurezahl von > 90 mg KOH,
- 0,5 - 50 Gew.-% Wasser und/oder eines organischen Lösemittels oder Lösemittelgemisches,
- 0 - 10 Gew.-% eines Neutralisationsmittels, und
- 0 - 10 Gew.-% eines Modifiziermittels
enthält.

2. Nichtstaubende homogene Pigmentpräparation nach Anspruch 1, **dadurch gekennzeichnet, daß** das Effektpigment ein Perlglanzpigment und/oder ein mit ein oder mehreren Metalloxiden beschichtetes SiO₂-Plättchen ist.

3. Nichtstaubende homogene Pigmentpräparation nach Anspruch 2, **dadurch gekennzeichnet, daß** das Perlglanzpigment ein TiO₂/Glimmer- oder Fe₂O₃-Glimmerpigment ist.

4. Nichtstaubende homogene Pigmentpräparation nach Anspruch 2, **dadurch gekennzeichnet, daß** das SiO₂-Plättchen mit TiO₂ und/oder Fe₂O₃ beschichtet ist.

5. Nichtstaubende homogene Pigmentpräparation nach einem der Ansprüche 1 bis 4, **dadurch gekennzeichnet, daß** das Polyacrylatharz ein α-Methylstyrol-modifiziertes Polyacrylat ist.

6. Nichtstaubende homogene Pigmentpräparation nach einem der Ansprüche 1 bis 5, **dadurch gekennzeichnet, daß** sie als zusätzliche Komponenten Entschäumer, oberflächenaktive Substanzen, Netzmittel, Antiabsetzmittel, Verlaufsmittel, Sikkative und/oder Thioxotropiermittel enthält.

7. Verwendung der Pigmentpräparation nach Anspruch 1 zur Herstellung von Trockenpräparaten, wie Granulate, Briketts und Pellets.

8. Trockenpräparate hergestellt aus der nichtstaubenden homogenen Pigmentpräparation nach einem der Ansprüche 1 bis 7, indem die Formgebung der Trockenpräparate durch Tablettieren, Brikettieren, Pelletieren, Wirbelschichtgranulieren, Granulieren, Sprühgranulieren oder Extrudieren erfolgt, und die Trockenpräparate gegebenenfalls vom Lösemittel befreit werden.

9. Verwendung der Trockenpräparate nach Anspruch 8 in Formulierungen wie Farben, Lacken, Druckfarben, Kunststoffen, Automobillacken und Pulverlacken.

10. Verfahren zur Herstellung der Pigmentpräparation nach einem der Ansprüche 1 bis 6, **dadurch gekennzeichnet, daß** zu dem Effektpigment bzw. Effektpigmentgemisch ein Styrol-modifiziertes Polyacrylatharz mit einer Säurezahl > 90 mg/KOH, Wasser und/oder ein organisches Lösemittel oder Lösemittelgemisch, gegebenenfalls ein Modifiziermittel und gegebenenfalls weitere Additive, gleichzeitig oder nacheinander hinzugegeben werden, und daß diese Mischung in einem Mischgerät schonend homogenisiert wird.

## Claims

1. Non-dusting homogeneous pigment preparation, **characterised in that** it comprises
- ≥40 % by weight of one or more effect pigments,
- 0.5 - 59.9 % by weight of a styrene-modified polyacrylate having an acid number of > 90 mg of KOH/g,
- 0.5 - 50 % by weight of water and/or an organic solvent or solvent mixture,
- 0 - 10 % by weight of a neutraliser, and
- 0 - 10 % by weight of a modifier.

2. Non-dusting homogeneous pigment preparation according to Claim 1, **characterised in that** the effect pigment is a pearlescent pigment and/or an SiO₂ flake coated with one or more metal oxides.

3. Non-dusting homogeneous pigment preparation according to Claim 2, **characterised in that** the pearlescent pigment is a TiO₂/mica or Fe₂O₃/mica pigment.

4. Non-dusting homogeneous pigment preparation according to Claim 2, **characterised in that** the SiO₂ flake is coated with TiO₂ and/or Fe₂O₃.

5. Non-dusting homogeneous pigment preparation according to one of Claims 1 to 4, **characterised in that** the polyacrylate resin is an α-methylstyrene-modified polyacrylate.

6. Non-dusting homogeneous pigment preparation according to one of Claims 1 to 5, **characterised in that** it comprises, as additional components, antifoams, surface-active substances, wetting agents, antisettling agents, flow-control agents, siccatives and/or thixotropic agents.

7. Use of the pigment preparation according to Claim 1 for the production of dry preparations, such as granules, briquettes and pellets.

8. Dry preparations produced from the non-dusting homogeneous pigment preparation according to one of Claims 1 to 7 by carrying out the shaping of the dry preparations by tabletting, briquetting, pelleting, fluidised-bed granulation, granulation, spray granulation or extrusion, and, if appropriate, freeing the dry preparations from solvent.

9. Use of the dry preparations according to Claim 8 in formulations, such as paints, coatings, printing inks, plastics, automotive paints and powder coatings.

10. Process for the preparation of the pigment preparation according to one of Claims 1 to 6, **characterised in that** a styrene-modified polyacrylate resin having an acid number of > 90 mg of KOH/g, water and/or an organic solvent or solvent mixture, if desired a modifier and if desired further additives are added simultaneously or successively to the effect pigment or effect pigment mixture, and **in that** this mixture is homogenised under gentle conditions in a mixing unit.

## Revendications

1. Préparation de pigment homogène sans formation particulaire, **caractérisée en ce qu'**elle comprend
- ≥40 % en poids d'un ou plusieurs pigments d'effet,
- 0.5 - 59.9 % en poids d'un polyacrylate modifié par styrène, présentant un indice d'acidité supérieur à 90 mg de KOH/g,
- 0.5 - 50 % en poids d'eau et/ou d'un solvant organique ou d'un mélange de solvants,
- 0 - 10 % en poids d'un neutraliseur, et
- 0 - 10 % en poids d'un modificateur.

2. Préparation de pigment homogène sans formation particulaire selon la revendication 1, **caractérisée en ce que** le pigment d'effet est un pigment perlé et/ou un flocon de SiO₂ revêtu d'un ou plusieurs oxydes métalliques.

3. Préparation de pigment homogène sans formation particulaire selon la revendication 2, **caractérisée en ce que** le pigment perlé est un pigment de TiO₂/mica ou de Fe₂O₃/mica.

4. Préparation de pigment homogène sans formation particulaire selon la revendication 2, **caractérisée en ce que** le flocon de SiO₂ est revêtu de TiO₂ et/ou de Fe₂O₃.

5. Préparation de pigment homogène sans formation particulaire selon l'une quelconque des revendication 1 à 4, **caractérisée en ce que** la résine de polyacrylate est un polyacrylate modifié par α-méthyl-styrène.

6. Préparation de pigment homogène sans formation particulaire selon l'une quelconque des revendication 1 à 5, **caractérisée en ce qu'**elle comprend, en tant que composants additionnels, des anti-mousse, des substances tensioactives, des agents de mouillage, des agents suspenseurs, des agents de contrôle de fluage, des agents siccatifs et/ou thixotropes.

7. Utilisation de la préparation de pigment selon la revendication 1 pour la production de préparations sèches, telles que des granules, des briquettes et des pastilles.

8. Préparations sèches produites à partir de la préparation de pigment homogène sans formation particulaire selon l'une quelconque des revendication 1 à 7 en mettant en oeuvre la conformation des préparations sèches par une mise en tablettes, une mise en briquettes, une mise en pastilles, une granulation en lit fluidisé, une granulation, une granulation par brouillard ou une extrusion, et, si approprié, par enlèvement des préparations sèches du solvant.

9. Utilisation des préparations sèches selon la revendication 8 dans des formulations telles que des peintures, des revêtements, des encres d'impression, des plastiques, des peintures d'automobile et des revêtements pulvérulents.

10. Procédé pour la préparation de la préparation de pigment selon l'une quelconque des revendications 1 à 6, **caractérisé en ce qu'**une résine de polyacrylate modifié par styrène ayant un indice d'acidité supérieur à 90 mg de KOH/g, de l'eau et/ou un solvant organique ou un mélange de solvants, si on le souhaite un modificateur et si on le souhaite d'autres additifs sont additionnés simultanément ou successivement au pigment d'effet ou au mélange de pigments d'effet, et **en ce que** ce mélange est homogénéisé sous des conditions peu agressives dans une unité de mélange.
